# Europäisches Patentamt
# European Patent Office
# Office européen des brevets

(11) Numéro de publication: **0 069 024**
**B1**

(12) **FASCICULE DE BREVET EUROPEEN**

(45) Date de publication du fascicule du brevet: **12.08.87**

(51) Int. Cl.⁴: **C 10 L 5/44**

(21) Numéro de dépôt: **82401227.2**

(22) Date de dépôt: **30.06.82**

(54) **Produit combustible sous forme d'un bloc solide pour l'alimentation d'un foyer ouvert.**

(30) Priorité: **30.06.81 FR 8112848**

(43) Date de publication de la demande:
**05.01.83 Bulletin 83/01**

(45) Mention de la délivrance du brevet:
**12.08.87 Bulletin 87/33**

(84) Etats contractants désignés:
**AT BE CH DE GB IT LI LU NL SE**

(56) Documents cités:
**DE-B-1 262 962**
**DE-C- 409 550**
**FR-A- 535 165**
**FR-A- 983 455**
**FR-A-1 106 237**
**US-A- 642 313**
**US-A-4 243 393**

**Le dossier contient des informations techniques présentées postérieurement au dépôt de la demande et ne figurant pas dans le présent fascicule.**

(73) Titulaire: **LAURENT FRERES & BEAU-FRERE
Société Anonyme dite:
29 rue Tronchet
F-75008 Paris (FR)**

(72) Inventeur: **Liber, Jean-Claude
F-76690 Clères (FR)**

(74) Mandataire: **Bonnetat, Christian et al
Cabinet PROPI Conseils 23 rue de Léningrad
F-75008 Paris (FR)**

Courier Press, Leamington Spa, England.

EP 0 069 024 B1

## Description

La présente invention concerne une unité de combustion sous forme d'un bloc solide homogène apte à alimenter et à entretenir un foyer ouvert ou un âtre.

Traditionnellement, les feux entretenus dans un foyer ouvert ou âtre sont alimentés à partir de bûches de bois.

Cependant, l'expérience montre que la plus grande partie de la chaleur émise par la combustion des bûches est perdue et s'échappe par le conduit de fumée.

On a cherché sans doute à remédier à cet inconvénient bien connu par des aménagements et des perfectionnements apportés à l'installation de la cheminée par exemple en aménageant des circuits pour améliorer les échanges thermiques et la récupération des calories des gaz de combustion.

On sait que la dispersion des calories du foyer peut être obtenues par conduction, par convection ou par rayonnement.

La conduction suppose un aménagement du foyer de façon à permettre un transfert des calories depuis les gaz brûlés vers un fluide vecteur, ce qui suppose une installation et un aménagement important du foyer entraînant un coût d'investissement élevé; on connaît ainsi des dispositifs de récupération de chaleur disposés au niveau du foyer, ou du conduit de fumée et permettant le réchauffement d'eau circulant dans des canalisations de chauffage central, les calories récupérées au niveau du foyer étant dispersées au niveau d'un convecteur.

Mais ces installations outre leur prix d'investissement ne permettent de récupérer (par conduction) qu'une mineure partie des calories.

Le réchauffement du local par convection n'est pas possible en utilisant directement des gaz brûlés qui doivent être évacués; de sortie que ces gaz chauds ne peuvent être utilisés qu'en passant par un échangeur comme précédemment indiqué; ainsi, en pratique la plus grande partie de la chaleur dégagée de la combustion reste piégée dans les gaz brûlés et est définitivement perdue en s'échappant vers l'atmosphère.

Enfin, l'émission de chaleur par rayonnement infrarouge reste très limitée, dans le cas d'un foyer ouvert.

En fait, l'alimentation du foyer par le matériau combustible qui vient se superposer au matériau en cours de combustion, forme un écran qui s'oppose à une émission importante de chaleur par rayonnement; et les expériences montrent que cette émission par rayonnement ne se produit qu'en fin de combustion, lorsque les matériaux largement brûlés forment un lit de braises qui n'est plus recouvert par un combustible frais, ajouté pour réalimenter le foyer; la récupération de chaleur par émission infrarouge depuis un foyer ouvert se trouve donc limitée dans le temps, en fin de combustion, lorsque le feul cesse d'être réalimenté; cette mauvaise répartition dans le temps de l'émission infrarouge depuis un foyer ouvert est désavantageuse dans la mesure où l'utilisateur recherche dans le foyer ouvert une ambiance chaleureuse associée à la sensation de bien-être procurée par le rayonnement infrarouge régulier et modéré, alliée au plaisir des yeux et au spectacle que procure le jeu vivant des flammes et la richesse des colories se dégageant du foyer.

Or, en pratique, dans le cas le plus courant d'un feu entretenu pour une soirée de durée limitée à une heure ou deux, le feu entretenu dans le foyer ouvert passe par une phase de combustion vive, riche en flammes, mais pauvre en émission infrarouge étant donné que les parties extérieures du combustibles forment écran, suivi d'une phase pauvre en flammes et riche en émission infrarouge lorsque le feu est réduit au lit de braises final; mais dans ce cas, l'émission infrarouge peut être excessive, voire insupportable pour les personnes situées face au foyer.

Il est donc souhaitable, notamment dans le cadre d'un feu d'âtre allumé et alimenté pendant durée limitée, à l'occasion d'une soirée familiale ou entre amis, de pouvoir bénéficier pendant toute cette période à la fois du spectacle de la flamme vive, et d'un réchauffement régulier par une émission infrarouge directement mais modérément ressentie pendant toute la durée de la soirée par les personnes présentes.

Or ce résultat ne peut pas être obtenu avec le matériau traditionnellement utilisé dans un feu d'âtre, à savoir les bûches de bois.

On a constaté qu'une bûche unique brûle difficilement, et émet un rayonnement vers le sol qui s'échauffe; dès que l'on tourne la bûche de 90° vers la pièce, l'émission infrarouge cesse.

Lorsque deux bûches sont disposées parallèlement, l'émission thermique infrarouge est nettement plus élevée, mais la plupart du temps elle est orientée vers l'avaloir de fumée et perdue pour les participants.

Lorsque trois bûches brûlent ensemble l'émission thermique reste concentrée au foyer des trois bûches, l'une des bûches fait obstacle à l'émission infrarouge vers la pièce où est située la cheminée. La chaleur émise par la combustion de ces trois bûches se dissipe au contact de l'air nécessaire à la combustion, les calories dégagées sont entraînées par les fumées et l'air complémentaire, dans le conduit par convection naturelle, d'où le mauvais rendement en matière de chauffage, d'une cheminée à foyer ouvert.

On a cherché également à modifier la structure de produits combustibles tels que des bûches de bois de façon à obtenir un meilleur rendement du foyer notamment par amélioration de la circulation de l'air afin d'arriver à une meilleure combustion.

Ainsi le brevet français 1 106 237 décrit une bûche dans le corps de laquelle ont été pratiquées deux fentes sensiblement orthogonales la bûche étant ensuite immergée à chaud dans un liquide combustible.

Le brevet US—A—4243393 décrit un produit combustible de structure tubulaire obtenu par extrusion de matériau à base de charbon et dont la paroi duquel sont pratiquées des fentes ou des perforations pour constituer des arrivées d'air.

La présente invention vise à remédier à ces inconvénients.

Et l'invention concerne à cet effet une unité de combustion en matéraiu solide formant un bloc cylindrique longiforme homogène tel qu'une bûche de bois apte à alimenter et entretenir un feu ouvert dans un âtre, du type comportant une pluralité d'évidements traversant le bloc et caractérisée en ce que lesdits évidements sont constitués en combinaison, d'une part d'au moins une fente plane traversant le bloc de débouchant sur deux longues faces dudit bloc et d'autre part, d'une pluralité de passages d'axes orthogonaux par rapport au plan de ladite fente, chaque passage orthogonal etant constitué d'alésages cylindriques de diamètre compris entre 0,4 et 0,8 fois l'épaisseur du bloc longiforme et débouchant sur une longue face formant face avant du bloc et aboutissant du côté opposé à une fente intérieure, la paroi arrière de ladite fente étant ainsi apparente depuis la face avant de la bûche au travers desdits passages.

De préférence, la largeur de la fente est comprise entre 2 et 20 mm.

De préférence encore, le bloc combustible solide longiforme comporte une pluralité de fentes disposées successivement le long du bloc et en alignement sensiblement suivant le même plan.

De préférence selon cette variante le bloc comporte une pluralité de passages alignés le long du bloc longiforme, les passages étant d'axe parallèle.

Selon une caractéristique plus particulière, le bloc comporte une fente plane le traversant de part en part et disposée sensiblement au tiers de l'épaisseur du bloc, la fente séparant ainsi deux parties, soit une partie de faible épaisseur, et une partie plus épaisse, et les passages orthogonaux sont pratiqués dans ladite partie épaisse.

Selon une autre caractéristique particulière de l'invention le corps longiforme comporte des moyens de positionnement constitués d'un méplat permettant de positionner le bloc sur un support, tel que des chênets de cheminée, les fentes étant positionées selon un plan sensiblement vertical, les passages orthogonaux étant disposés sensiblement horizontalement et orientés vers l'espace intérieur du local desservi par l'âtre.

Plus particulièrement, le bloc combustible est en matériau ligneux, tel que le bois, fibres de bois ou particules de bois agglomérés.

Les dessins annexés de la description qui suit illustrent quelques formes de réalisation de l'invention.

La figure 1 représente une vue en perspective d'un bloc combustible sous forme de bûches de bois usinées selon les caractéristiques de l'invention.

La figure 2 représente une vue plus de détail en perspective avec coupe partielle de la bûche de la figure 1.

La figure 3 représente une vue en coupe transversale de la bûche des figures 1 et 2.

La figure 4 représente une variante d'une forme de réalisation.

La figure 5 représente une vue en perspective de la bûche et des figures 1, 2 et 3 en cours de combustion dans un foyer ouvert.

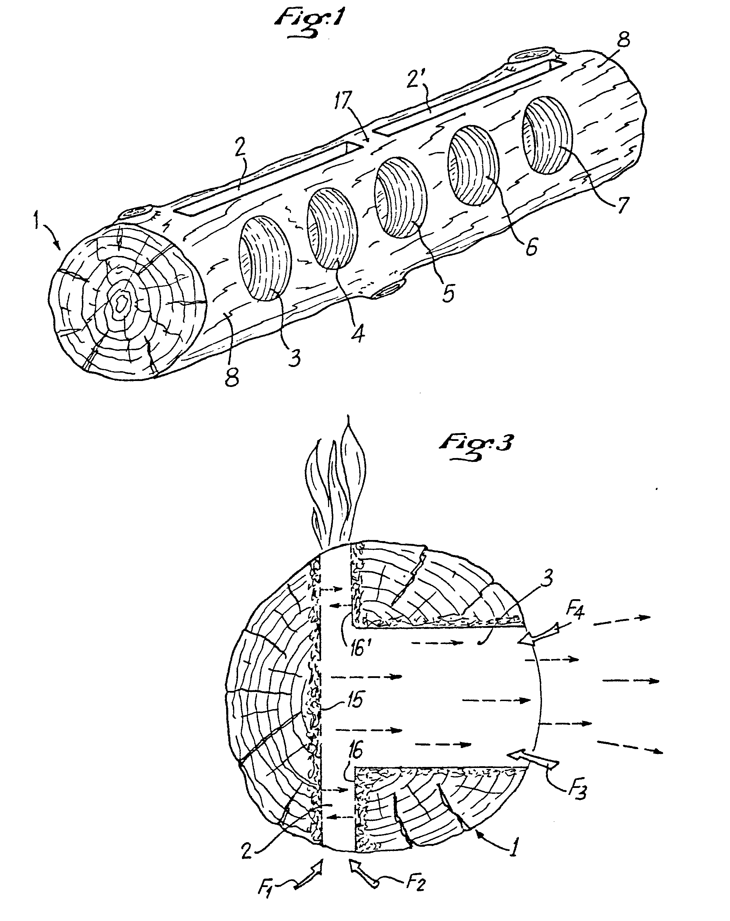

Selon les figures 1, 2, 3 et 5, le bloc combustible est ici constitué d'une bûche de bois coupé aux dimensions traditionnelles et se présentant sous la forme d'un corps longiforme plus spécialement de forme généralement cylindrique.

Le corps de la bûche 1 comporte 1, et de préférence 2 fentes 2, 2' qui traversent de part en part la bûche et débouchent sur deux faces opposées.

Ces fentes intérieures sont associées à des alésages orthogonaux respectivement 3, 4, 5, 6 et 7.

Les fentes 2, 2' étant disposées verticalement, les alésages orthogonaux 3, 4, 5, 6 et 7 sont alors disposés horizontalement et débouchent sur une face, constituant la face avant 8 de la bûche.

Tandis que le fond des alésages orthogonaux 3, 4, 5, 6 et 7 débouchent au niveau des fentes respectivement 2, 2'.

La bûche ainsi réalisée est orientée en ce sens que dans l'utilisation ainsi qu'on l'exposera plus loin, la bûche doit être disposée de façon que les fentes 2, 2' soient disposées verticalement.

A cet effet, les fentes successives 2, 2' sont disposées dans un même plan et en alignement.

Pareillement, les alésages orthogonaux 3, 4, 5, 6 et 7 sont sensiblement alignés et sont d'axes parallèles.

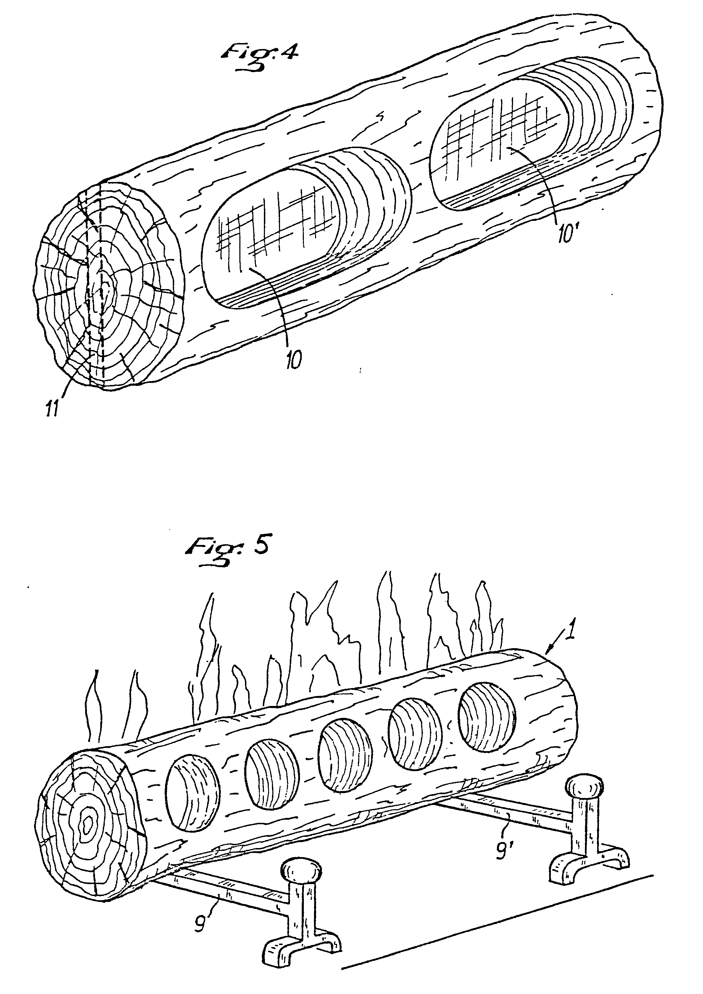

Ainsi, la bûche étant en position dans le foyer (voir figure 5) les passages orthogonaux font face au local desservi par le foyer.

Les moyens d'immobilisation de la bûche dans sa position peuvent être constitués d'un simple méplat permettant l'équilibre de la bûche sur les chênets 9, 9'.

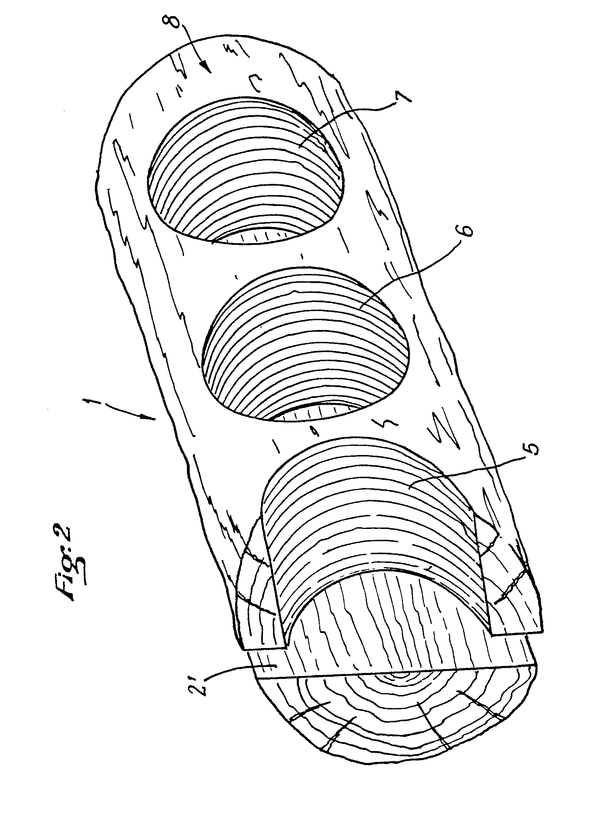

La combustion de la bûche ainsi réalisée est illustrée par la figure 3.

L'invention permet en effet, ainsi qu'on le voit sur la figure 5, de réaliser un feu d'âtre à partir d'une bûche unique, tout en obtenant des conditions de récupération de chaleur notamment par rayonnement thermique, sans comparaison avec les résultats obtenus antérieurement par les moyens empiriques traditionnels constituant à empiler les bûches; et l'invention est notamment remarquable en ce qu'elle permet la combustion d'une bûche unique sans préparation particulière, sans avoir notamment à allumer progressivement le feu à partir de "petit bois".

Dans Is cadre de l'invention, la bûche se consumme par l'intérieur des cheminées verticales que constituent que les fentes 2, 2'.

Cette zone de combustion est alimentée en air comburant par la base selon les flèches (blanches) $F_1$ et $F_2$ et par les alésages frontaux 3, 4 etc . . . selon les flèches (blanches) $F_3$, $F_4$.

On réalisé ainsi dans l'espace confiné constitué par les deux parois se faisant face des fentes 2, 2' une zone privilégiée, alimentée régulièrement en air comburant et/ou la combustion peut se développer progressivement.

L'élévation thermique dans cette zone limitée est facilitée par le fait que les deux parois de la fente se font face et rayonnement mutuellement leur chaleur en permettant l'élévation rapide de la température qui facilite l'entretien et le développement de la combustion.

Cependant, la face arrière 15 de la fente 2 se trouve dégagée dans les zones en regard des alésages 3, 4, 5, 6, 7 et la combustion entretenue au niveau de cette paroi émet un rayonnement direct qui s'échappe par les alésages 3, 4, 5, 6 et 7; ces alésages constituent en réalité un projecteur qui permet une émission directionnelle du rayonnement thermique vers le local desservi, rayonnement qui est directement ressenti par les personnes présentes.

Et ce rayonnement se produit dès le début de la combustion; il est entretenu régulièrement sans pointe et sans affaiblissement pendant toute la période de combustion de la bûche, de sorte que les personnes présentes peuvent bénéficier à la fois et pendant toute la période correspondant à la combustion de la bûche du spectacle des flammes vives et des couleurs associées au phénomène de combustion et en même temps d'un rayonnement thermique doux et constant procurant la sensation de bien-être recherchée.

Les flèches en pointillé de la figure 3 représentent le cheminement du rayonnement thermique entretenu par la combustion de la bûche.

Le corps solide selon l'invention réalise donc ce paradoxe de permettre la combustion de la bûche par l'intérieur; en effet, comme on le voit sur la figure 3, les parois respectivement de la fente 2 et de l'alésage orthogonal 3 qui sont régulièrement alimentées en air comburant sont progressivement soumises au phénomène de combustion.

La réalisation du corps combustible selon l'invention, notamment dans le cas d'une bûche de bois permet beaucoup plus qu'une amélioration de la combustion par simple accroissement des surfaces d'échange; la disposition selon l'invention permet d'aménager dans l'espace intérieur du corps solide un véritable "mini foyer" avec cheminement des gaz alimentant la combustion, puis des gaz brûlés, en entretenant ainsi la combustion; les parois deviennent émettrices de rayonnements infrarouges et étant alimentées en gaz comburant et entretenues à une température voulue (notamment par la réflexion des parois voisines en cours de combustion) rayonnent de façon directionnelle; en effet, les infrarouges, émis loin d'être dispersés dans toutes les directions, sont concentrés vers les sujets récepteurs.

L'invention permet en outre dans les zones séparant les alésages orthogonaux 3, 4, 5, 6, 7 de sectionner les vaisseaux capillaires du bois en permettant, dès le début de la combustion, une élimination des vapeurs d'eau résiduelles piégées dans les fibres du bois, ceci notamment dans le cas d'un bois qui ne serait par complètement sec.

La figure 4 montre une variante de réalisation.

Selon la figure 4, les passages orthogonaux sont constitués par des alésages allongés 10, 10' et ils coopèrent avec une fente (représentée en pointillé en 11) disposées sensiblement au tiers arrière de la bûche.

Comme on le voit sur la figure 3, de préférence, le fente plane 2 est disposée sensiblement à un tiers de l'épaisseur de la bûche, en séparant la partie arrière de faible épaisseur d'une partie avant plus épaisse et dans laquelle sont pratiqués les alésages 3, 4, 5, 6 et 7.

L'allumage initial est effectué à la base de la fente 2; à cet effet la bûche peut avantageusement être munie de produit combustible de démarrage, tel que de l'alcool solide inséré à la base de la fente 2, ce qui permet notamment dans le cas d'une utilisation urbaine un allumage simple et rapide.

Dans un premier temps, une flamme apparaît par le haut de la fente 2, les parois 15, 16, 16' sont portées à une température de l'ordre de 100° à 200°; il se dégage des distillats contenant des fractions acides et alcooliques, les gaz sont formés en majeure partie de $CO_2$. L'air nécessaire à la combustion arrive par le bas de la fente 2 et les alésages 3, 4, 5, 6, et 7.

Quelques temps après, lorsque la température du bois s'élève, la réaction devient exothermique, les gaz se dégagent en abondance par le haut de la fente 2, la flamme devient beaucoup plus importante, et la majeure partie de l'eau contenue dans le bois s'est échappée sous la forme de vapeur.

Vers 400° et 500°, l'hydrogène et les carbures constituent la majeure partie des gaz.

Une couche de bois incandescente apparaît sur les parois 15, 16, 16'. Les flammes extérieures diminuent en intensité. Les faces incandescentes 15, 16, 16' sont constituées principalement de charbon de bois. Elles émettent de la chaleur rayonnant par les alésages 3, 4, 5, 6 et 7.

Compte-tenu des parois 15, 16, 16' incandescentes disposées face à face, l'émission calorifique rayonnante reste entretenue jusqu'à la complète combustion par ignition des parois.

Les bûches, objet de l'invention, peuvent être réalisées à partir de matériaux combustibles agglomérés et comprimés.

D'une manière générale l'invention vise à récupérer un maximum d'énergie au niveau d'un combustible, lors de son utilisation dans une cheminée à foyer ouvert, en ayant au préalable usiné des perforations pour:

—obtenir un maximum d'énergie radiante orientée,

—optimiser le mélange air/gaz combustible lors de la première phase de combustion, en canalisant l'air à l'intérieur du combustible.

Par ailleurs, si les perforations sont faites au moment opportun, elles améliorent d'une façon considérable le séchage du bois:

—pendant le stockage,

—pendant sa combustion.

En outre, la notion de fente ou de perforation permet de connaître et de contrôler la durée de combustion d'une bûche et d'agir en conséquence sur les dimensions de ces fentes, si l'on désire une combustion "froide" ou "chaude", de longue ou de courte durée.

La préparation à l'allumage de la bûche est facilitée par l'introduction d'un insert allumeur disposé à l'intérieur d'une fente en partie basse de la bûche.

Les expériences et essais conduits par les demandeurs montrent que la récupération de chaleur dans le cas de l'utilisation du bloc combustible, notamment de la bûche de l'invention est doublée par rapport au combustible constitué de bûches traditionnelles.

L'invention concerne également l'appareillage permettant de réaliser la bûche objet du brevet.

A cet effet, l'invention porte sur une machine pour l'usinage de bûches en vue de la réalisation d'une unité de combustion caractérisée en ce qu'elle comporte des moyens pour le positionnement et l'immobilisation des deux bûches, des premiers moyens de travail du bois tels qu'une mortaiseuse, apte à opérer, par enlèvement de matières, la formation d'une fente intérieure traversant la bûche de part en part selon un plan voisin et parallèle à un plan diamétral, et des seconds moyens de travail du bois pénétrant dans la bûche perpendiculairement au plan de ladite fente et aptes à opérer des alésages orthogonaux à ladite fente.

Les premiers moyens d'usinage peuvent être constitués par une chaîne de mortaisage qui pénètre sensiblement selon un axe diamétral ou selon un axe voisin d'un plan diamétral dans la bûche en la traversant de part en part et qui se déplace, de façon connue, selon l'axe longitudinal de la bûche et permet ainsi d'opérer dans cette dernière la ou les fentes successives 2 et 2'.

Les seconds moyens peuvent être constitués soit d'un outil rotatif d'enlèvement de matières par formation de copeaux, soit d'un outil rotatif de coupe tel qu'un trépan découpant transversalement dans la bûche, "une carotte" cylindrique.

Dans le cas où l'on utilisera à titre de second moyen, destiné à former les alésages transversaux 3, 4, 5, 6 ou 8, un outil rotatif par enlèvement de copeau, on procèdera à la formation des alésages en premier lieu; on fore ainsi des trous cylindriques borgnes; et ce n'est que dans un deuxième temps que la chaîne de mortaisage procède à la formation de la fente diamétrale ou sensiblement diamétrale qui rejoint le fond des alésages borgnes, ces derniers débouchant alors dans ladite fente; en opérant dans cet ordre on évite ainsi les contraintes mécaniques exercées par l'outil de forage lorsqu'il déboucherait dans la vide formé par la fente.

Au contraire, lorsque les seconds moyens sont constitués par un outil rotatif de coupe tel qu'une trépan, découpant une carotte intérieure, dans ce cas, il est évident que le trépan, pour sortir la carotte ainsi formée et découpée doit aboutir à la fente diamètrale ou sensiblement diamètrale qui aura alors été préalablement réalisée.

## Revendications

1. Unité de combustion en matériau solide formant un bloc cylindrique longiforme homogène tel qu'une bûche de bois apte à alimenter et entretenir un feu ouvert dans un âtre, du type comportant une pluralité d'évidements traversant le bloc, caractérisée:

a) en ce que lesdits évidements sont constitués en combinaison, d'une part d'au moins une fente (2, 2') plane, traversant le bloc et débouchant sur deux longues faces dudit bloc et d'autre part, d'une pluralité de passages (3, 4, 5, 6 et 7), d'axes orthogonaux par rapport au plan de ladite fente (2, 2'), chaque passage orthogonal étant constitué d'alésages cylindriques de diamètre compris entre 0,4 et 0,8 fois l'épaisseur du bloc longiforme et débouchant sur une longue face formant face avant (8) du bloc et aboutissant du côté opposé à une fente intérieure (2, 2'), la paroi arrière (15) de ladite fente étant ainsi apparente depuis la face avant (8) de la bûche au travers desdits passages (3, 4, 5, 6, 7),

b) et en ce qu'elle comporte des moyens d'immobilisation constitués d'un méplat permettant le positionnement stable du bloc notamment sur des chênets de telle façon que dans cette position stable et univoque, la fente soit située selon un plan sensiblement vertical, les passages orthogonaux étant ainsi aptes à être orientés horizontalement et tournés vers l'espace du local desservi par l'âtre.

2. Unité de combustion selon la revendication 1, ci-dessus, caractérisée en ce que chaque fente (2, 2') comporte une largeur comprise entre 2 et 20 mm.

3. Unité de combustion selon l'une des revendications 1 à 2 précédentes, caractérisée en ce que les fentes (2, 2') sont disposées en alignement sensiblement selon le même plan le long du corps longiforme.

4. Unité de combustion selon la revendication 1 ci-dessus, caractérisé en ce que les passages orthogonaux (3, 4, 5, 6, 7) sont disposés en alignement et selon des axes parallèles.

5. Unité de combustion selon l'une des revendications 1 à 4 ci-dessus, caractérisée en ce que chaque fente (2, 2') est disposée sensiblement au tiers de l'épaisseur du bloc et elle sépare deux parties, soit une partie de faible épaisseur, d'une partie plus épaisse, et les passages orthogonaux sont pratiqués dans ladite partie épaisse.

## Patentansprüche

1. Feststoff-Brenneinheit bestehend aus einem gleichmäßig länglich ausgebildeten Zylinderblock wie ein Holzklotz zum Speisen und Unterhalten eines offenen Feuers in einem Kamin oder einer Feuerstelle, wobei mehrere Ausnehmungen den Klotz durchziehen, dadurch gekennzeichnet,

a) daß die Ausnehmungen ausgebildeten sind als Kombination aus einerseits zumindest einem ebenen Spalt oder Schlitzloch (2, 2'), ber bzw. das den Klotz durchzieht und auf den beiden Langflä-

9     **0 069 024**     10

chen des Klotzes ausläuft, und andererseits mehreren Durchgängen (3, 4, 5, 6 und 7), deren Achsen zur Ebene des Spalts (2, 2') orthogonal liegen, wobei jeder orthogonale Durchgang aus zylinderförmigen Ausbohrungen mit einem Durchmesser zwischen 0,4 und 0,8 mal der Dicke des länglichen Klotzes gebildet ist und in eine die Vorderseite (8) des Klotzes bildenden Langfläche mündet sowie auf der gegenüberliegenden Seite auf den inneren Spalt (2, 2') trifft, so daß die hintere Wand (15) des Spaltes über die Durchgänge (3, 4, 5, 6, 7) von der Vorderseite (8) des Holzklotzes einsichtig ist, und

b) daß die Brenneinheit Mittel zum Festlegen oder Unbeweglichmachen aufweist, die aus einer Abflachung bestehen, durch die der Klotz in eine stabile Lage, insbesondere auf einem Feuerbock, gebracht werden kann, so daß der Spalt in dieser stabilen und eindeutig festgelegten Lage in einer allgemein im Lot stehenden Ebene liegt und die orthogonalen Durchgänge horizontal ausrichtbar und dem Raum zugewendet sind, der von der Feuerstelle erwärmt werden soll.

2. Feststoff-Brenneinheit nach Anspruch 1, dadurch gekennzeichnet, daß jeder Spalt (2, 2') eine zwischen 2 und 20 mm liegenden Breite aufweist.

3. Feststoff-Brenneinheit nach einem der Ansprüche 1 bis 2, dadurch gekennzeichnet, daß die Spalte (2, 2') angeordnet sind in einer Ausrichtung allgemein in Übereinstimmung mit derselben Ebene längs des länglichen Körpers.

4. Feststoff-Brenneinheit nach dem vorhergehenden Anspruch 1, dadurch gekennzeichnet, daß die orthogonalen Durchgänge (3, 4, 5, 6, 7) ausgerichtet angeordnet sind und parallelen Achsen folgen.

5. Feststoff-Brenneinheit nach einem der vorhergehenden Ansprüche 1 bis 4, dadurch gekennzeichnet, daß jeder Spalt (2, 2') deutlich im Drittel der Dicke des Klotzes liegt und zwei Teile, einen Teil geringerer und einen größerer Dicke, trennt und daß die orthogonalen Durchgänge in den dickeren Teil eingelassen sind.

**Claims**

1. Combustion unit of solid material forming a homogeneous longiform cylindrical block such as a log of wood adapted to supply and maintain an open fire in a hearth, of the type comprising a plurality of recesses passing through the block, characterized:

a) in that said recesses are constituted in combination, on the one hand, by at least one plane slot (2, 2'), passing through the block and opening out on two long faces of said block and, on the other hand, by a plurality of passages (3, 4, 5, 6 and 7), with axes at right angles with respect to the plane of said slot (2, 2'), each orthogonal passage being constituted by cylindrical bores of diameter included between 0.4 and 0.8 times the thickness of the longiform block and opening out on a long face forming front face (8) of the block and terminating on the opposite side in an inner slot (2, 2'), the rear wall (15) of said slot thus being visible from the front face (8) of the log through said passages (3, 4, 5, 6, 7),

b) and in that it comprises immobilization means constituted by a flat portion allowing the stable positioning of the block, particularly on the fire-dogs, so that, in this stable and univocal position, the slot is located in a substantially vertical plane, the orthogonal passages thus being adapted to be oriented horizontally and turned towards the space of the premises served by the hearth.

2. Combustion unit according to Claim 1 hereinabove, characterized in that each slot (2, 2') comprises a width included between 2 and 20 mm.

3. Combustion unit according to one of preceding Claims 1 to 2, characterized in that the slots (2, 2') are disposed in alignment substantially in the same plane along the longiform body.

4. Combustion unit according to Claim 1 hereinabove, characterized in that the orthogonal passages (3, 4, 5, 6, 7) are disposed in alignment and along parallel axes.

5. Combustion unit according to one of Claims 1 to 4 hereinabove, characterized in that each slot (2, 2') is disposed substantially at one third of the thickness of the block and it separates two parts, viz. a part of small thickness from a thicker part, and the orthogonal passages are made in said thick part.

6

*Fig:1*

*Fig:3*

Fig. 2

*Fig. 4*

*Fig. 5*